# EUROPEAN PATENT APPLICATION

(11) **EP 4 382 356 A1**
(43) Date of publication of application: **12.06.2024**
(21) Application number: 22855089.3
(22) Date of filing: 24.06.2022
(51) Int. Cl.: B60N 2/28

(54) **ISOFIX STRUCTURE AND CHILD SAFETY SEAT**

(30) Priority: 09.08.2021 CN 202110906941
(71) Applicant: Ningbo Baby First Baby Products Co., Ltd., Ningbo, Zhejiang 315412 (CN)
(72) Inventor: JI, Xuewei, Ningbo, Zhejiang 315412 (CN); LIU, Jianchun, Ningbo, Zhejiang 315412 (CN)
(74) Representative: Herrmann, Uwe
(86) International application number: PCT/CN2022/101084
(87) International publication number: WO 2023/016104

(57) **Abstract**

Disclosed are an International Standards Organization Fix (ISOFIX) structure and a child safety seat including the same. The ISOFIX structure includes a base sleeve (200) and a shell (100) extending in a first direction. The base sleeve (200) is sleeved over an outer side of the shell (100) and is movable relative to the shell (100) in the first direction. A plurality of positioning holes (110) are provided at intervals on an outer wall of the shell (100) in the first direction. An elastic locking pin assembly is arranged on the base sleeve (200). The elastic locking pin assembly includes a positioning pin (310) and an elastic reset member (320), and the elastic reset member (320) is connected to the positioning pin (310). The positioning pin (310) is configured to be inserted into a positioning hole (110) of the plurality of positioning holes (110). The elastic reset member (320) is configured to allow the positioning pin (310) to have a tendency of moving into the positioning hole (110). A lock release structure (400) is arranged in the shell (100). The lock release structure (400) is configured to push the positioning pin (310) to move toward the outer side of the shell (100).

## Description

### TECHNICAL FIELD

The present disclosure relates to the technical field of child safety seats, and particularly to an International Standards Organization Fix (ISOFIX) structure and a child safety seat including the same.

### BACKGROUND

ISOFIX refers to a system for connecting a child restraint system to a vehicle. ISOFIX includes two rigid connection points on the vehicle and two matching rigid connection devices on the child restraint system, and also provides an anti-rollover method (such as using a top tether or using a support leg). ISOFIX is a new standard for installing child safety seats in vehicles. This standard is being accepted by numerous vehicle manufacturers.

An ISOFIX assembly structure for a child safety seat in the prior art includes a shell and a sleeve. The sleeve is sleeved over an outer side of the shell and is movable in a length direction of the shell. A plurality of positioning holes are provided at intervals on the sleeve in a length direction of the sleeve. A fastening member for connecting to an anchor point on a vehicle, an unlocking assembly for driving the fastening member to move, and a positioning assembly for engaging with the positioning holes are arranged in the shell.

In the prior art, there are too many parts arranged in the shell. On the one hand, the volume of the shell is consequently increased, and in turn, the volume of the sleeve slidably connected to the outer side of the shell is also increased, affecting the arrangement of the child safety seat. On the other hand, to reduce the volume of the shell, the parts in the shell are arranged to be compact. As a result, when the vehicle vibrates, the adjacent parts interfere and collide with each other, leading to damage to the parts.

### SUMMARY

An objective of the present disclosure is to provide an ISOFIX structure and a child safety seat including the same, in order to alleviate the technical problem that existing ISOFIX structures have a large volume and are prone to damage.

According to a first aspect, an embodiment of the present disclosure provides an ISOFIX structure, including a base sleeve and a shell extending in a first direction, where the base sleeve is sleeved over an outer side of the shell and is movable relative to the shell in the first direction;
a plurality of positioning holes are provided at intervals on an outer wall of the shell in the first direction, an elastic locking pin assembly is arranged on the base sleeve, the elastic locking pin assembly includes a positioning pin and an elastic reset member, the elastic reset member is connected to the positioning pin, the positioning pin is configured to be inserted into a positioning hole of the plurality of positioning holes, and the elastic reset member is configured to allow the positioning pin to have a tendency of moving into the positioning hole; and
a lock release structure is arranged in the shell, and the lock release structure is configured to push the positioning pin to move toward the outer side of the shell.

Further, a first guide chamfer and a second guide chamfer are respectively provided on side walls of a top end of the positioning pin and are arranged to respectively face a connector end and a tail end of the shell, and in a direction from the connector end to the tail end of the shell, the first guide chamfer is inclined toward an inside of the shell and the second guide chamfer is inclined toward an outside of the shell;
a plurality of protrusion-recess structures respectively corresponding to the plurality of positioning holes are arranged on a side of the lock release structure facing the plurality of positioning holes; the plurality of protrusion-recess structures respectively include protrusions and recesses arranged in sequence in the direction from the connector end to the tail end of the shell;
the lock release structure is movable relative to the shell in the first direction to cause the protrusions or the recesses to respectively align with the plurality of positioning holes; and when the protrusions are respectively aligned with the plurality of positioning holes and the top end of the positioning pin abuts against a top surface of a protrusion of the protrusions, an outer edge of the first guide chamfer and an outer edge of the second guide chamfer are located outside a respective positioning hole of the plurality of positioning holes in an inside-outside direction of the respective positioning hole.

Further, a third guide chamfer is provided on a side of the protrusion facing the tail end of the shell and is inclined in an identical direction to the first guide chamfer, and when the lock release structure moves toward the tail end of the shell, the third guide chamfer is configured to be in sliding contact with the first guide chamfer and push the positioning pin to move toward an outer side of the respective positioning hole to the top surface of the protrusion.

Further, when the recesses on the lock release structure are respectively aligned with the plurality of positioning holes and the top end of the positioning pin abuts against a bottom surface of a recess of the recesses, the outer edge of the first guide chamfer is located outside a respective positioning hole of the plurality of positioning holes and the outer edge of the second guide chamfer is located inside the respective positioning hole in an inside-outside direction of the respective positioning hole.

Further, a first abutting portion and a second abutting portion are arranged on the fastening member along a circumferential direction of the fastening member, the first abutting portion is configured to abut against the lock release structure when the fastening member is in an open state and cause the lock release structure to be at a first position relative to the shell, and the plurality of positioning holes are respectively aligned with the recesses when the lock release structure is at the first position; the second abutting portion is configured to abut against the lock release structure when the fastening member is in an engaged state and cause the lock release structure to be at a second position relative to the shell, the plurality of positioning holes are respectively aligned with the recesses when the lock release structure is at the second position, and the lock release structure at the second position is closer to the connector end of the shell than the lock release structure at the first position is;
a lifting boss is arranged in the recess on the one of the plurality of protrusion-recess structures closest to the tail end of the shell, a spacing for accommodating the positioning pin is formed between a protrusion on the one of the plurality of protrusion-recess structures closest to the tail end of the shell and the lifting boss in the direction from the connector end to the tail end of the shell, and a fourth guide chamfer is provided on a side of the lifting boss facing the connector end of the shell;
when the fastening member is changed from the open state to the engaged state, the fourth guide chamfer is configured to be in sliding contact with the second guide chamfer of the positioning pin and push the positioning pin to move toward an outer side of the respective positioning hole to a top surface of the lifting boss; and when the top end of the positioning pin abuts against the top surface of the lifting boss, the outer edge of the first guide chamfer is located outside the respective positioning hole and the outer edge of the second guide chamfer is located inside the respective positioning hole.

Further, the first abutting portion and the second abutting portion form a stepped structure, and when the fastening member is in the engaged state, an end of the lock release structure close to the connector end is engaged in the stepped structure, and the first abutting portion is configured to prevent the fastening member from rotating relative to the shell.

Further, the elastic locking pin assembly includes a guide sleeve, a through hole communicating an inside and an outside of the base sleeve is formed on a wall of the base sleeve, the guide sleeve is connected to an outer wall of the base sleeve, and an opening of the guide sleeve is aligned with the through hole; and
the positioning pin is slidably connected in the guide sleeve, and the elastic reset member is located between a bottom of the guide sleeve and a bottom of the positioning pin.

According to a second aspect, an embodiment of the present disclosure provides a child safety seat, including the ISOFIX structure as described above.

In the ISOFIX structure provided in the embodiment of the present disclosure, the lock release structure is arranged in the shell, and the lock release structure is configured to push the positioning pin to move toward the outer side of the shell. By sliding the base sleeve on the shell, the positioning pin on the base sleeve can be inserted into different positioning holes to realize the adjustment between different setting positions, and the unlock operation of unlocking the positioning pin can be realized through the lock release structure. The ISOFIX structure provided in the embodiment of the present disclosure is different from the prior art in that the elastic locking pin assembly is not arranged in the shell, but on the base sleeve, to reduce the number of parts in the shell. As such, the overall volume of the shell can be reduced, thereby reducing the volume of the ISOFIX structure and meeting more assembly requirements. In addition, because the elastic locking pin assembly is not arranged in the shell, the number of parts in the shell is reduced, which is conducive to the arrangement of other parts in the shell, thereby reducing the risk of interference between the parts.

The child safety seat provided in the embodiment of the present disclosure includes the ISOFIX structure as described above. Because the child safety seat provided in the embodiment of the present disclosure uses the ISOFIX structure, the child safety seat provided in the embodiment of the present disclosure also has the advantages of the ISOFIX structure.

### BRIEF DESCRIPTION OF THE DRAWINGS

In order to more clearly explain the technical solutions in the specific embodiments of the present disclosure or in the prior art, the drawings used in the description of the specific embodiments or the prior art will be briefly described below. Obviously, the drawings depicted below are merely some embodiments of the present disclosure, and those skilled in the art can obtain other drawings based on these drawings without any creative efforts.
FIG. 1 is a schematic diagram of an ISOFIX structure according to an embodiment of the present disclosure.
FIG. 2 is a schematic diagram of an ISOFIX structure with a base sleeve being removed according to an embodiment of the present disclosure.
FIG. 3 is a schematic diagram showing an interior of a shell of an ISOFIX structure according to an embodiment of the present disclosure.
FIG. 4 is an exploded view of an ISOFIX structure according to an embodiment of the present disclosure.
FIG. 5 is a cross-sectional view of a base sleeve of an ISOFIX structure according to an embodiment of the present disclosure.
FIG. 6 is a schematic top view of the internal structure of an ISOFIX structure in an initial state according to an embodiment of the present disclosure.
FIG. 7 is a schematic front view of the internal structure of the ISOFIX structure in FIG. 6.
FIG. 8 is a partially enlarged view of part A in FIG. 6.
FIG. 9 is a schematic top view of the internal structure of an ISOFIX structure after a lock release structure is pulled when a fastening member is in an open state according to an embodiment of the present disclosure.
FIG. 10 is a schematic front view of the internal structure of the ISOFIX structure in FIG. 9.
FIG. 11 is a partially enlarged view of part B in FIG. 9.
FIG. 12 is a schematic top view of the internal structure of an ISOFIX structure when a fastening member is in an open state and a positioning pin is located in a rearmost recess according to an embodiment of the present disclosure.
FIG. 13 is a schematic front view of the internal structure of the ISOFIX structure in FIG. 12.
FIG. 14 is a partially enlarged view of part C in FIG. 12.
FIG. 15 is a schematic top view of the internal structure of an ISOFIX structure when a fastening member is in an engaged state according to an embodiment of the present disclosure.
FIG. 16 is a schematic front view of the internal structure of the ISOFIX structure in FIG. 15.
FIG. 17 is a partially enlarged view of part D in FIG. 15.
FIG. 18 is a schematic top view of the internal structure of an ISOFIX structure after a base sleeve is moved when a fastening member is in an engaged state according to an embodiment of the present disclosure.
FIG. 19 is a schematic front view of the internal structure of the ISOFIX structure in FIG. 18.
FIG. 20 is a partially enlarged view of part E in FIG. 18.
FIG. 21 is a schematic diagram of the internal structure of an ISOFIX structure when a fastening member is unlocked according to an embodiment of the present disclosure.
FIG. 22 is a schematic front view of the internal structure of the ISOFIX structure in FIG. 21.
FIG. 23 is a partially enlarged view of part F in FIG. 21.

Reference numerals: 100 - shell; 110 - positioning hole; 120 - connector end; 130 - tail end; 140 - limiting column; 150 - left shell; 160 - right shell; 200 - base sleeve; 310 - positioning pin; 311 - first guide chamfer; 3111 - outer edge of first guide chamfer; 312 - second guide chamfer; 3121 - outer edge of second guide chamfer; 320 - elastic reset member; 400 - lock release structure; 410 - protrusion; 411 - third guide chamfer; 420 - recess; 430 - lifting boss; 440 - handle; 510 - fastening member; 511 - engaging portion; 512 - first abutting portion; 513 - second abutting portion; 520 - rotating shaft; 530 - elastic traction member; 610 - guide sleeve; 620 - collar; 700 - anchor point on vehicle.

### DETAILED DESCRIPTION OF THE EMBODIMENTS

The technical solutions of the present disclosure will be described clearly and fully through embodiments. Apparently, the embodiments described are merely some embodiments, rather than all of the embodiments of the present disclosure. All other embodiments obtained by a person of ordinary skill in the art without creative efforts based on the embodiments of the present disclosure shall fall within the protection scope of the present disclosure.

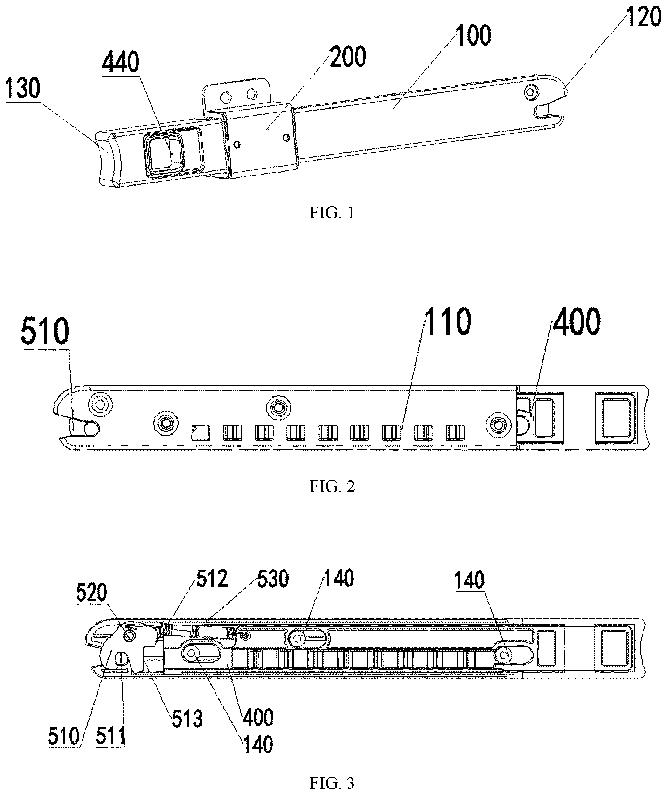

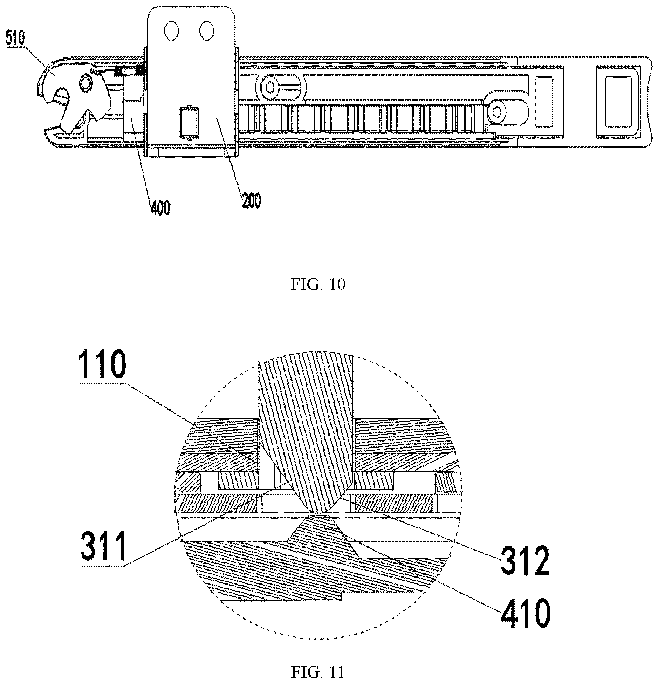

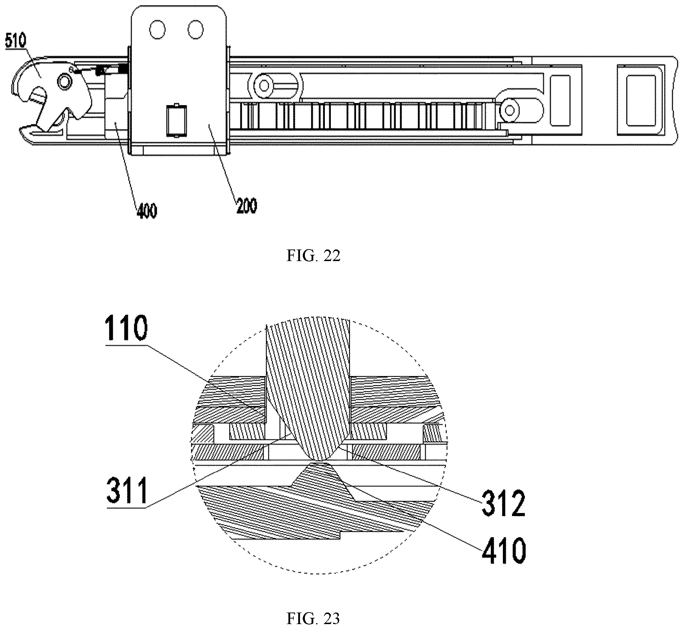

As shown in FIG. 1 to FIG. 23, an ISOFIX structure provided in an embodiment of the present disclosure may be mounted at a bottom of a child safety seat, and two ISOFIX structures are usually arranged at the bottom of one child safety seat.

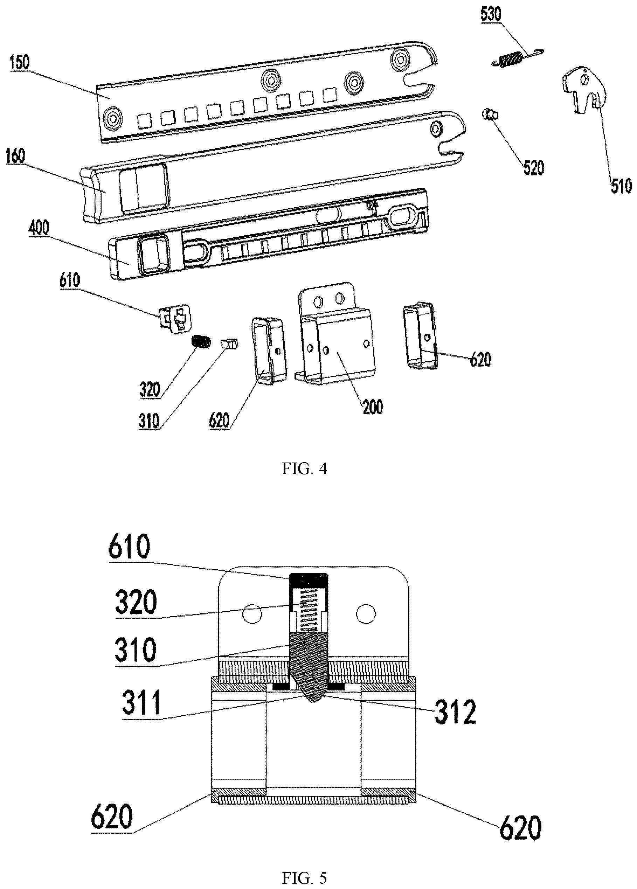

As shown in FIG. 1 to FIG. 5, the ISOFIX structure includes a base sleeve 200 and a shell 100. The shell 100 is strip-shaped. A length direction of the shell 100 is defined as a first direction in this embodiment. The base sleeve 200 is sleeved over an outer side of the shell 100 and is movable relative to the shell 100 in the first direction. A plurality of positioning holes 110 are provided at intervals on an outer wall of the shell 100 in the first direction. In this embodiment, the number of positioning holes 110 is 9 and each of the positioning holes 110 may have a rectangular cross-section. As shown in FIG. 5, an elastic locking pin assembly is arranged on the base sleeve 200. The elastic locking pin assembly includes a positioning pin 310 and an elastic reset member 320, and the elastic reset member 320 is connected to the positioning pin 310. A moving direction of the positioning pin 310 is parallel to a depth direction of each of the positioning holes 110. During sliding of the base sleeve 200 in the first direction, when the positioning pin 310 is aligned with a positioning hole 110 of the positioning holes 110, the positioning pin 310 can extend into the positioning hole 110 under the action of the elastic reset member 320. Specifically, the elastic reset member 320 may be a spring. A lock release structure 400 is arranged in the shell 100. The lock release structure 400 is driven manually or electrically. The lock release structure 400 may push the positioning pin 310 to move toward the outer side of the shell 100, so that the positioning pin 310 can detach from the positioning hole 110.

The lock release structure 400 is configured to push the positioning pin 310 to move toward the outer side of the shell 100. By sliding the base sleeve 200 on the shell 100, the positioning pin 310 on the base sleeve 200 can be inserted into different positioning holes 110 to realize the adjustment between different setting positions, and the unlock operation of unlocking the positioning pin 310 can be realized through the lock release structure 400. The ISOFIX structure provided in this embodiment is different from the prior art in that the elastic locking pin assembly is not arranged in the shell 100, but on the base sleeve 200, to reduce the number of parts in the shell 100. As such, the overall volume of the shell 100 can be reduced, thereby reducing the volume of the ISOFIX structure and meeting more assembly requirements. In addition, because the elastic locking pin assembly is not arranged in the shell 100, the number of parts in the shell 100 is reduced, which is conducive to the arrangement of other parts in the shell 100, thereby reducing the risk of interference between the parts.

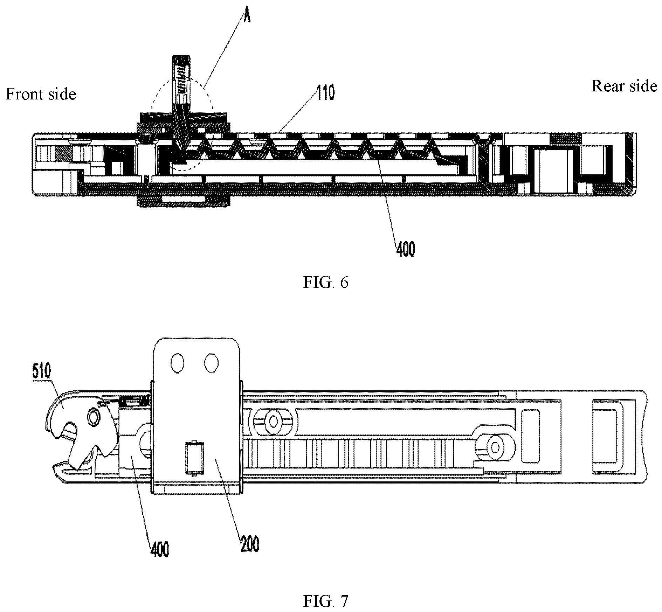

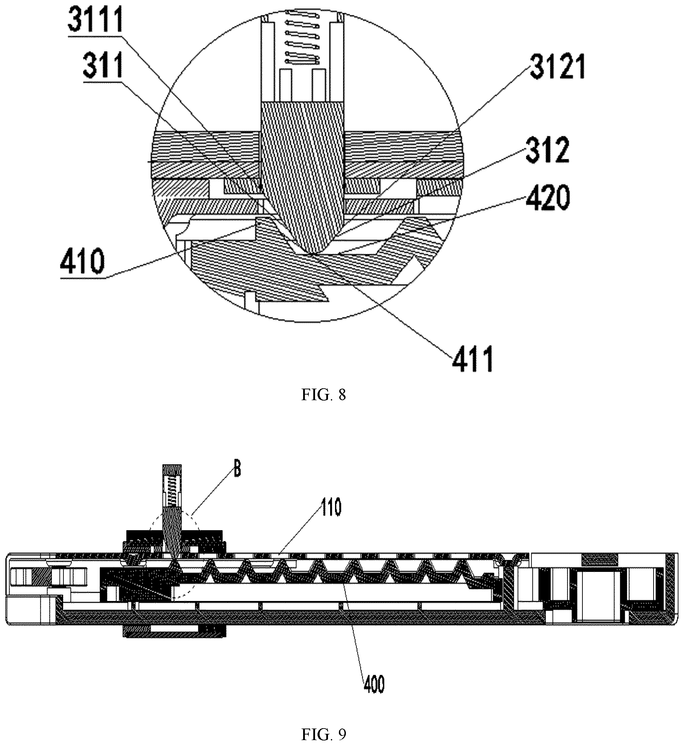

As shown in FIG. 6 to FIG. 8, a first guide chamfer 311 and a second guide chamfer 312 are respectively provided on side walls of a top end of the positioning pin 310 and are arranged to respectively face a connector end 120 and a tail end 130 of the shell 100. In a direction from the connector end 120 to the tail end 130 of the shell 100, the first guide chamfer 311 is inclined toward an inside of the shell 100 and the second guide chamfer 312 is inclined toward an outside of the shell 100. A plurality of protrusion-recess structures respectively corresponding to the plurality of positioning holes 110 are arranged on a side of the lock release structure 400 facing the plurality of positioning holes 110. The plurality of protrusion-recess structures respectively include protrusions 410 and recesses 420 arranged in sequence in the direction from the connector end 120 to the tail end 130 of the shell 100. The lock release structure 400 is movable relative to the shell 100 in the first direction to cause the protrusions 410 or the recesses 420 to respectively align with the plurality of positioning holes 110. As shown in FIG. 9 to FIG. 11, when the protrusions 410 are respectively aligned with the plurality of positioning holes 110 and the top end of the positioning pin 310 abuts against a top surface of a protrusion 410 of the protrusions 410, an outer edge 3111 of the first guide chamfer and an outer edge 3121 of the second guide chamfer are located outside a respective positioning hole 110 of the plurality of positioning holes 110 in an inside-outside direction of the respective positioning hole 110.

The top end of the positioning pin 310 is an end abutting against the lock release structure 400. For convenience of illustration, in this embodiment, a side that the connector end 120 of the shell 100 faces is defined as a front side, and a side that the tail end 130 of the shell 100 faces is defined as a rear side. The first guide chamfer 311 and the second guide chamfer 312 respectively face the front side and the rear side. The first guide chamfer 311 and the second guide chamfer 312 form a "V" shape, or an extension plane of the first guide chamfer 311 and an extension plane of the second guide chamfer 312 form a "V" shape. In the inside-outside direction of the shell 100, each of the first guide chamfer 311 and the second guide chamfer 312 includes an inner edge close to an inner side of the shell 100 and an outer edge away from the shell 100. The inner edge of the first guide chamfer 311 and the inner edge of the second guide chamfer 312 are at the same height, and the outer edge 3111 of the first guide chamfer is higher than the outer edge 3121 of the second guide chamfer. The plurality of protrusion-recess structures may provide a continuous alternating arrangement of protrusions 410 and recesses 420. In the direction from the connector end 120 to the tail end 130, each of the protrusion-recess structures begins with a protrusion 410. As shown in FIG. 7 and FIG. 8, in an initial state, the recesses 420 on the lock release structure 400 are respectively aligned with the positioning holes 110, and the positioning pin 310 extends into a recess 420 of the recesses 420. By pulling the lock release structure 400 in the first direction toward the rear side, the protrusions 410 on the lock release structure 400 can be respectively aligned with the positioning holes 110. In this case, the protrusion 410 on a front side of the positioning pin 310 can push the positioning pin 310 through the first guide chamfer 311 to move outward, and the top end of the positioning pin 310 abuts against the lock release structure 400 all the time and finally moves to the top surface of the protrusion 410. Lengths and positions of the first guide chamfer 311 and the second guide chamfer 312 and heights of the protrusions 410 are properly designed. When the top end of the positioning pin 310 abuts against the top surface of the protrusion 410, the outer edge 3111 of the first guide chamfer and the outer edge 3121 of the second guide chamfer are located outside the respective positioning hole 110. In other words, by pushing the base sleeve 200 to move forward or backward, the positioning pin 310 can be moved upward and outward under the action of the first guide chamfer 311 and the second guide chamfer 312, to completely detach from the respective positioning hole 110, thus realizing unlocking of the positioning pin 310. In addition, because the positioning holes 110 are respectively aligned with the protrusions 410, the base sleeve 200 can freely slide back and forth in the first direction.

Further, a third guide chamfer 411 is provided on a side of the protrusion 410 facing the tail end 130 of the shell 100 and is inclined in an identical direction to the first guide chamfer 311. When the lock release structure 400 moves toward the tail end 130 of the shell 100, the third guide chamfer 411 is configured to be in sliding contact with the first guide chamfer 311 and push the positioning pin 310 to move toward an outer side of the respective positioning hole 110 to the top surface of the protrusion 410. A surface of the protrusion 410 facing the rear side may be the third guide chamfer 411. The third guide chamfer 411 is parallel to the first guide chamfer 311. When the third guide chamfer 411 and the first guide chamfer 311 of the positioning pin 310 come into contact, the third guide chamfer 411 and the first guide chamfer 311 of the positioning pin 310 may be in sliding contact with each other, and the positioning pin 310 can be pushed to move outward more smoothly.

As shown in FIG. 8, the lengths and positions of the first guide chamfer 311 and the second guide chamfer 312 and depths of the recesses 420 are properly designed. When the recesses 420 on the lock release structure 400 are respectively aligned with the plurality of positioning holes 110 and the top end of the positioning pin 310 abuts against a bottom surface of a recess 420 of the recesses 420, the outer edge 3111 of the first guide chamfer is located outside a respective positioning hole 110 of the plurality of positioning holes 110 and the outer edge 3121 of the second guide chamfer is located inside the respective positioning hole 110 in an inside-outside direction of the respective positioning hole 110. Therefore, when the positioning pin 310 is located in a positioning hole 110 of the positioning holes 110 and a respective one of the recesses 420, the base sleeve 200 may be pushed to move forward to cause the first guide chamfer 311 to abut against an edge of an opening of the positioning hole 110, and cause the positioning pin 310 to move outward under the action of the first guide chamfer 311, so that the positioning pin 310 completely detaches from the positioning hole 110 and the base sleeve 200 can move toward the front side. Because the outer edge 3121 of the second guide chamfer is located inside the positioning hole 110 and a columnar side wall of the positioning pin 310 abuts against the positioning hole 110, the base sleeve 200 cannot move toward the rear side. In other words, a body of a child safety seat mounted on the base sleeve 200 can move toward a seat back of a vehicle along with the base sleeve 200, but cannot move in the opposite direction, so that locking in one direction can be realized. Because the seat back of the vehicle has a limiting function, a user can push the body of the child safety seat toward the seat back of the vehicle as much as possible when the positioning pin 310 is in a locked state. As such, the user can adjust the position of the child safety seat more conveniently.

As shown in FIG. 7, the ISOFIX structure further includes a fastening member 510, a rotating shaft 520, and an elastic traction member 530. The fastening member 510, the rotating shaft 520, and the elastic traction member 530 are all located at the connector end 120 of the shell 100. The fastening member 510 is rotatably connected to the shell 100 through the rotating shaft 520. A first end of the elastic traction member 530 is connected to the fastening member 510, and a second end of the elastic traction member 530 is connected to the lock release structure 400. The elastic traction member 530 may be a tension spring. The elastic traction member 530 is configured to pull the fastening member 510 and the lock release structure 400 toward each other to enable the elastic traction member 530 to pull the fastening member 510 to rotate. As shown in FIG. 9 to FIG. 11, when the user pulls the lock release structure 400 to move toward the rear side, the elastic traction member 530 drives the fastening member 510 to rotate clockwise, thereby completing an action of unlocking the fastening member 510. In the initial state, an engaging portion 511 of the fastening member 510 is in an open state, and the lock release structure 400 abuts against the fastening member 510 under the traction of the elastic traction member 530. In this case, the recesses 420 on the lock release structure 400 are respectively aligned with the positioning holes 110. When the lock release structure 400 is pulled backward, the fastening member 510 cannot continue to rotate clockwise due to the structural restriction of the shell 100 because the fastening member 510 is already in the open state. After the positioning pin 310 is unlocked, the fastening member 510 is in a state to be engaged with an anchor point 700 on the vehicle.

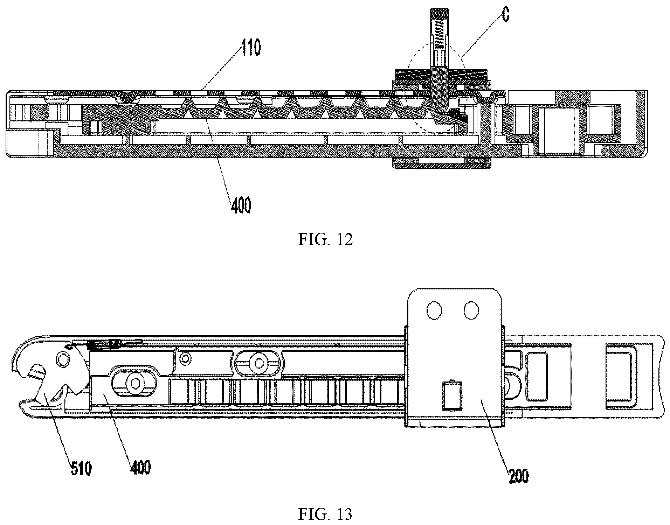

As shown in FIG. 12 to FIG. 14, a depth of a recess on one of the plurality of protrusion-recess structures closest to the tail end 130 of the shell 100 is greater than a depth of each of recesses on other ones of the plurality of protrusion-recess structures. When the recesses are respectively aligned with the plurality of positioning holes 110 and the top end of the positioning pin 310 abuts against the bottom surface of the recess on the one of the plurality of protrusion-recess structures closest to the tail end 130 of the shell 100, the outer edge 3111 of the first guide chamfer and the outer edge 3121 of the second guide chamfer are located inside the respective positioning hole 110 in the inside-outside direction of the respective positioning hole 110.

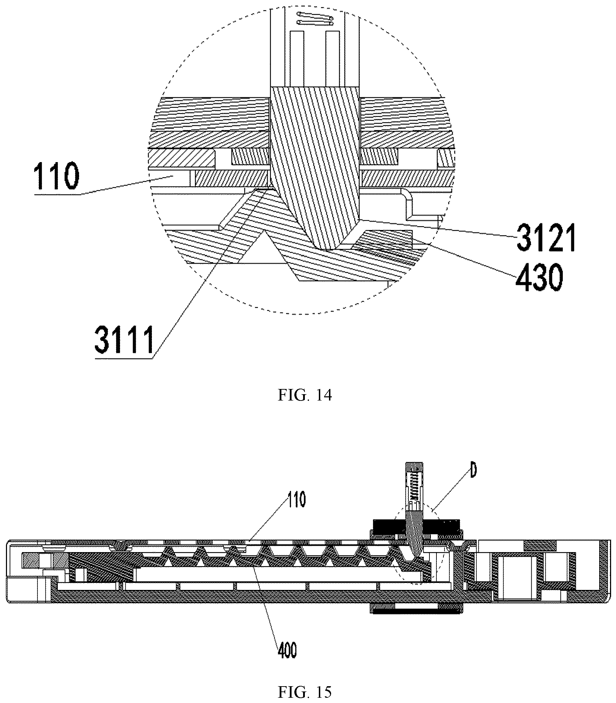

In this embodiment, the number of recesses 420 and the number of positioning holes 110 are the same, and may be 9. The depth of the recess 420 in the rearmost protrusion-recess structure is greater than the depth of the recess 420 in any other protrusion-recess structure. By designing the lengths and positions of the first guide chamfer 311 and the second guide chamfer 312 and the depth of the recess 420 in the rearmost protrusion-recess structure, when the top end of the positioning pin 310 abuts against the bottom surface of the recess in the rearmost protrusion-recess structure, as shown in FIG. 14, the outer edge 3111 of the first guide chamfer and the outer edge 3121 of the second guide chamfer are located inside the corresponding positioning hole 110, the columnar side wall of the positioning pin 310 abuts against the side wall of the corresponding positioning hole 110, and the base sleeve 200 cannot slide freely through the first guide chamfer 311 and the second guide chamfer 312, and is limited in a front-rear direction. The lock release structure 400 is pulled so that the positioning pin 310 enters the unlocked state, the base sleeve 200 is pulled to the rearmost positioning hole 110, and the lock release structure 400 is released. Under the action of the elastic traction member 530, the lock release structure moves forward to abut against the fastening member 510 in the open state. The recesses 420 correspond to the positioning holes 110, and the positioning pin 310 can be completely limited in the rearmost positioning hole 110. In this way, the base sleeve 200 and the shell 100 are relatively fixed, i.e., the body of the child safety seat and the shell 100 are relatively fixed, making it convenient for the user to connect the fastening member 510 on the shell 100 to the anchor point 700 on the vehicle.

As shown in FIG. 3, FIG. 12, FIG. 13, and FIG. 15 to FIG. 17, a first abutting portion 512 and a second abutting portion 513 are arranged on the fastening member 510 along a circumferential direction of the fastening member 510. The first abutting portion 512 is a protruding structure. The second abutting portion 513 is a recessed structure. The first abutting portion 512 and the second abutting portion 513 may form a stepped structure. As shown in FIG. 12, when the fastening member 510 is in the open state, the first abutting portion 512 abuts against the lock release structure 400 under the action of the elastic traction member 530 and causes the lock release structure 400 to be at a first position relative to the shell 100. When the lock release structure 400 is at the first position, the positioning holes 110 are respectively aligned with the recesses 420, and the positioning pin 310 may be inserted into one of the recesses 420. As shown in FIG. 15, after the fastening member 510 is pushed by the anchor point 700 on the vehicle to rotate counterclockwise, the fastening member 510 is in the engaged state, and the second abutting portion 513 abuts against the lock release structure 400 and causes the lock release structure 400 to be at a second position relative to the shell 100. When the lock release structure 400 is at the second position, the positioning holes 110 are respectively aligned with the recesses 420. Because the second abutting portion 513 is a recessed structure, the lock release structure 400 moves toward the front side by a short distance when the fastening member 510 changes from the open state to the engaged state, i.e., the lock release structure 400 at the second position is closer to the connector end 120 of the shell 100 than the lock release structure 400 at the first position is.

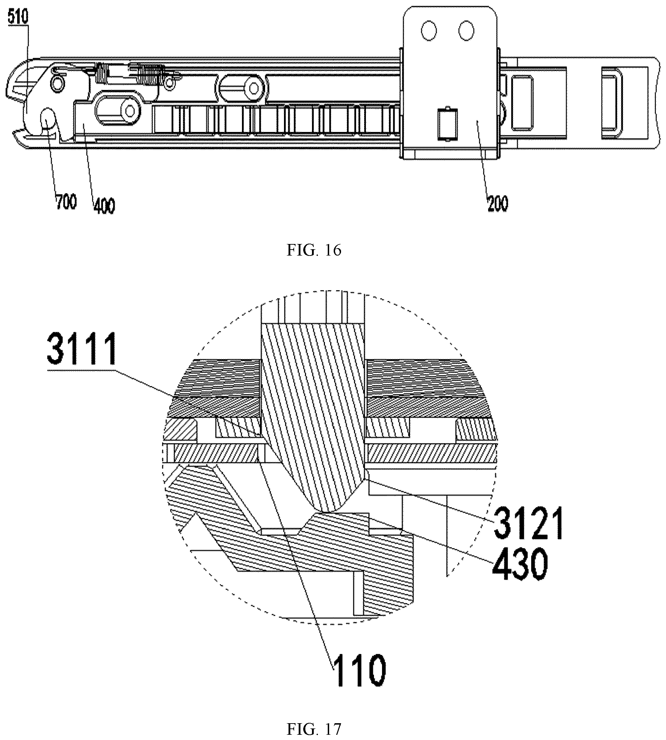

As shown in FIG. 17, a lifting boss 430 is arranged in the recess 420 on the one of the plurality of protrusion-recess structures closest to the tail end 130 of the shell 100. A spacing for accommodating the positioning pin 310 is formed between a protrusion 410 on the one of the plurality of protrusion-recess structures closest to the tail end 130 of the shell 100 and the lifting boss 430 in the direction from the connector end 120 to the tail end 130 of the shell 100. A distance between the protrusion 410 and the lifting boss 430 can at least accommodate the positioning pin 310.

A fourth guide chamfer is provided on a side of the lifting boss 430 facing the connector end 120 of the shell 100. An inclination direction of the fourth guide chamfer is identical to that of the second guide chamfer 312. When the fastening member 510 is changed from the open state to the engaged state, the fourth guide chamfer is configured to be in sliding contact with the second guide chamfer 312 of the positioning pin 310 and push the positioning pin 310 to move toward an outer side of the respective positioning hole 110 to a top surface of the lifting boss 430. When the top end of the positioning pin 310 abuts against the top surface of the lifting boss 430, the outer edge 3111 of the first guide chamfer is located outside the respective positioning hole 110 and the outer edge 3121 of the second guide chamfer is located inside the respective positioning hole 110. As such, the base sleeve 200 can move toward the front side, and cannot move toward the rear side. In the initial state, the lock release structure 400 abuts against the first abutting portion 512 of the fastening member 510, and the recesses 420 are exactly aligned with the positioning holes, respectively. The shell 100 is pushed to move forward to cause the engaging portion 511 of the fastening member 510 to rotate counterclockwise and engage with the anchor point 700 on the vehicle. After the position of the fastening member 510 is changed, the first abutting portion 512 no longer abuts against a front end of the lock release structure 400, and the lock release structure 400 abuts against the second abutting portion 513. In the whole process, the lock release structure 400 moves toward the front side by a distance, to cause the lifting boss 430 to lift the positioning pin 310.

As shown in FIG. 16, the first abutting portion 512 and the second abutting portion 513 form the stepped structure. When the fastening member 510 is in the engaged state, the first abutting portion 512 is closer to the tail end 130 of the shell 100 than the second abutting portion 513 is. When the fastening member 510 is in the engaged state, an end of the lock release structure 400 close to the connector end 120 is engaged in the stepped structure, and the first abutting portion 512 is configured to prevent the fastening member 510 from rotating relative to the shell 100. In other words, the fastening member 510 cannot rotate until the lock release structure 400 slides out of the stepped structure.

As shown in FIG. 5, the elastic locking pin assembly includes a guide sleeve 610. A through hole communicating an inside and an outside of the base sleeve 200 is formed on a wall of the base sleeve 200. The guide sleeve 610 is connected to an outer wall of the base sleeve 200. An opening of the guide sleeve 610 is aligned with the through hole. The positioning pin 310 is slidably connected in the guide sleeve 610. The elastic reset member is located between a bottom of the guide sleeve 610 and a bottom of the positioning pin 310.

A collar 620 is inserted into each of two ends of the base sleeve 200. The collar 620 includes a tube body having an outer diameter consistent with an inner diameter of the base sleeve 200. A limiting edge circumferentially protruding outward is arranged at an outer end of the tube body. The limiting edge abuts against an opening of the base sleeve 200 when an inner end of the tube body is inserted into the base sleeve 200. An inner wall of the collar 620 is in direct contact with the shell 100.

As shown in FIG. 1, a handle 440 is arranged on the lock release structure 400. A pull hole for avoiding the handle 440 is provided on the shell 100. The handle 440 may be pulled to cause the lock release structure 400 to move away from the fastening member 510.

As shown in FIG. 3, limiting columns 140 are arranged in the shell 100, and elongated limiting holes are provided on the lock release structure 400. A length direction of the elongated limiting hole is a front-rear direction of the shell 100. The limiting columns 140 are respectively located in the limiting holes, so that the lock release structure 400 can stably move relative to the shell 100 in the front-rear direction.

The shell 100 may include a left shell 150 and a right shell 160. The positioning holes 110 may be located on the left shell 150.

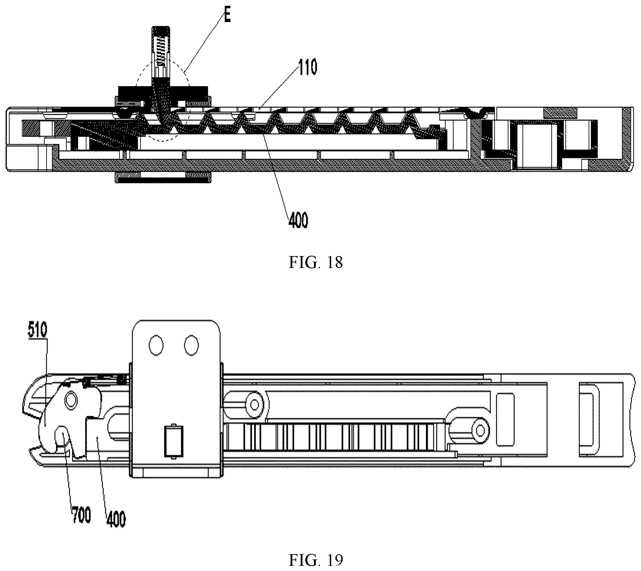

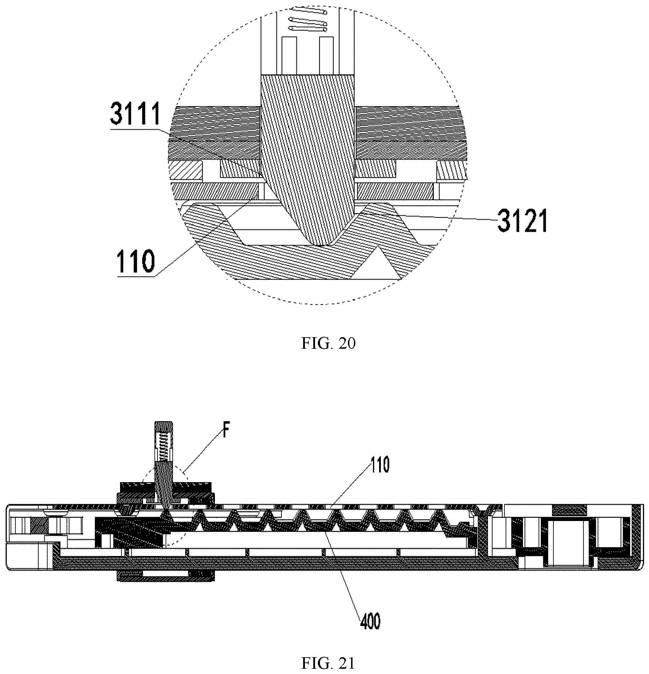

The operating principle of the ISOFIX structure is as follows.
1. As shown in FIG. 6 to FIG. 8, in the initial state, the fastening member 510 is in the open state, and the first abutting portion 512 of the fastening member 510 abuts against the lock release structure 400 under the action of the elastic traction member 530. The recesses 420 on the lock release structure 400 are respectively aligned with the positioning holes 110, and the positioning pin 310 on the base sleeve 200 is located in the front-most positioning hole 110.
2. As shown in FIG. 9 to FIG. 11, the lock release structure 400 is pulled backward, so that the protrusion 410 on the lock release structure 400 lifts up the positioning pin 310. In this case, the outer edge 3121 of the second guide chamfer of the positioning pin 310 is higher than the edge of the opening of the positioning hole 110, and a rear side of the positioning hole 110 pushes the second guide chamfer 312 of the positioning pin 310 to move upward. As such, the positioning pin 310 can be pushed out of the positioning hole 110.
3. As shown in FIG. 12 to FIG. 14, the base sleeve 200 may be pulled to a rearmost end of the shell 100, and the lock release structure 400 is released. The lock release structure 400 is at the first position, the recesses 420 are respectively aligned with the positioning holes 110, and straight surfaces of two sides of the positioning pin 310 are located in the recess 420 below the rearmost positioning hole 110. In this case, the base sleeve 200 cannot move forward or backward, i.e., is limited in the front-rear direction, to prevent the base sleeve 200 from shaking while connecting the ISOFIX structure to the anchor point 700 on the vehicle.
4. As shown in FIG. 15 to FIG. 17, the fastening member 510 is engaged with the anchor point 700 on the vehicle. After the fastening member 510 is rotated, the first abutting portion on the fastening member 510 no longer abuts against the lock release structure 400, and the lock release structure 400 moves forward under the traction of the elastic traction member 530 to urge against the second abutting portion 513 of the fastening member 510. At the same time, the lifting boss at a rear end of the lock release structure 400 lifts up the positioning pin 310. In this case, the outer edge 3111 of the first guide chamfer of the positioning pin 310 is higher than a front edge of the opening of the positioning hole 110, and a straight surface of a rear side of the positioning pin 310 is located below a rear edge of the opening of the positioning hole. As such, the base sleeve 200 can move forward but cannot move backward, thus realizing locking in one direction.
5. As shown in FIG. 18 to FIG. 20, when the fastening member 510 is in the engaged state, the base sleeve 200 can slide on the shell 100 in the first direction, and the base sleeve 200 can move to a setting position closest to the seat back of the vehicle, thus completing the mounting of the child safety seat.
6. As shown in FIG. 21 to FIG. 23, the lock release structure 400 is pulled toward the rear side, so that the third guide chamfer 411 of the lock release structure 400 lifts up the positioning pin 310 to unlock the positioning pin 310. The lock release structure 400 is disengaged from the stepped structure of the fastening member 510. The fastening member 510 rotates clockwise to enter the open state under the action of the elastic traction member 530.

The child safety seat provided in the embodiments of the present disclosure includes the ISOFIX structure. Because the child safety seat provided in the embodiments of the present disclosure uses the ISOFIX structure, the child safety seat provided in the embodiments of the present disclosure also has the advantages of the ISOFIX structure.

Finally, it should be noted that the above embodiments are intended to illustrate, instead of limiting the technical solution of the present disclosure. Although the present disclosure is described in detail by way of examples, it should be understood by those of ordinary skill in the art that modifications may be made to the technical solutions described in the embodiments, and equivalents may be substituted for some or all the technical features, without essentially departing from the scope of the technical solution described in the embodiments of the present disclosure.

## Claims

1. An International Standards Organization FIX (ISOFIX) structure, **characterized by** comprising a base sleeve (200) and a shell (100) extending in a first direction, wherein the base sleeve (200) is sleeved over an outer side of the shell (100) and is movable relative to the shell (100) in the first direction;
a plurality of positioning holes (110) are provided at intervals on an outer wall of the shell (100) in the first direction, an elastic locking pin assembly is arranged on the base sleeve (200), the elastic locking pin assembly comprises a positioning pin (310) and an elastic reset member (320), the elastic reset member (320) is connected to the positioning pin (310), the positioning pin (310) is configured to be inserted into a positioning hole (110) of the plurality of positioning holes (110), and the elastic reset member (320) is configured to allow the positioning pin (310) to have a tendency of moving into the positioning hole (110); and
a lock release structure (400) is arranged in the shell (100), and the lock release structure (400) is configured to push the positioning pin (310) to move toward the outer side of the shell (100).

2. The ISOFIX structure according to claim 1, **characterized in that** a first guide chamfer (311) and a second guide chamfer (312) are respectively provided on side walls of a top end of the positioning pin (310) and are arranged to respectively face a connector end (120) and a tail end (130) of the shell (100), and in a direction from the connector end (120) to the tail end (130) of the shell (100), the first guide chamfer (311) is inclined toward an inside of the shell (100) and the second guide chamfer (312) is inclined toward an outside of the shell (100);
a plurality of protrusion-recess structures respectively corresponding to the plurality of positioning holes (110) are arranged on a side of the lock release structure (400) facing the plurality of positioning holes (110); the plurality of protrusion-recess structures respectively comprise protrusions (410) and recesses (420) arranged in sequence in the direction from the connector end (120) to the tail end (130) of the shell (100);
the lock release structure (400) is movable relative to the shell (100) in the first direction to cause the protrusions (410) or the recesses (420) to respectively align with the plurality of positioning holes (110); and when the protrusions (410) are respectively aligned with the plurality of positioning holes (110) and the top end of the positioning pin (310) abuts against a top surface of a protrusion (410) of the protrusions (410), an outer edge (3111) of the first guide chamfer and an outer edge (3121) of the second guide chamfer are located outside a respective positioning hole (110) of the plurality of positioning holes (110) in an inside-outside direction of the respective positioning hole (110).

3. The ISOFIX structure according to claim 2, **characterized in that** a third guide chamfer (411) is provided on a side of the protrusion (410) facing the tail end (130) of the shell (100) and is inclined in an identical direction to the first guide chamfer (311), and when the lock release structure (400) moves toward the tail end (130) of the shell (100), the third guide chamfer (411) is configured to be in sliding contact with the first guide chamfer (311) and push the positioning pin (310) to move toward an outer side of the respective positioning hole (110) to the top surface of the protrusion (410).

4. The ISOFIX structure according to claim 2, **characterized in that** when the recesses (420) on the lock release structure (400) are respectively aligned with the plurality of positioning holes (110) and the top end of the positioning pin (310) abuts against a bottom surface of a recess (420) of the recesses (420), the outer edge (3111) of the first guide chamfer is located outside a respective positioning hole (110) of the plurality of positioning holes (110) and the outer edge (3121) of the second guide chamfer is located inside the respective positioning hole (110) in an inside-outside direction of the respective positioning hole (110).

5. The ISOFIX structure according to claim 4, **characterized by** further comprising a fastening member (510), a rotating shaft (520), and an elastic traction member (530), wherein the fastening member (510) is rotatably connected to the shell (100) through the rotating shaft (520), a first end of the elastic traction member (530) is connected to the fastening member (510), a second end of the elastic traction member (530) is connected to the lock release structure (400), and the elastic traction member (530) is configured to pull the fastening member (510) and the lock release structure (400) toward each other to enable the elastic traction member (530) to pull the fastening member (510) to rotate.

6. The ISOFIX structure according to claim 5, **characterized in that** a depth of a recess on one of the plurality of protrusion-recess structures closest to the tail end (130) of the shell (100) is greater than a depth of each of recesses on other ones of the plurality of protrusion-recess structures; and when the recesses are respectively aligned with the plurality of positioning holes (110) and the top end of the positioning pin (310) abuts against the bottom surface of the recess on the one of the plurality of protrusion-recess structures closest to the tail end (130) of the shell (100), the outer edge (3111) of the first guide chamfer and the outer edge (3121) of the second guide chamfer are located inside the respective positioning hole (110) in the inside-outside direction of the respective positioning hole (110).

7. The ISOFIX structure according to claim 6, **characterized in that** a first abutting portion (512) and a second abutting portion (513) are arranged on the fastening member (510) along a circumferential direction of the fastening member (510), the first abutting portion (512) is configured to abut against the lock release structure (400) when the fastening member (510) is in an open state and cause the lock release structure (400) to be at a first position relative to the shell (100), and the plurality of positioning holes (110) are respectively aligned with the recesses (420) when the lock release structure (400) is at the first position; the second abutting portion (513) is configured to abut against the lock release structure (400) when the fastening member (510) is in an engaged state and cause the lock release structure (400) to be at a second position relative to the shell (100), the plurality of positioning holes (110) are respectively aligned with the recesses (420) when the lock release structure (400) is at the second position, and the lock release structure (400) at the second position is closer to the connector end (120) of the shell (100) than the lock release structure (400) at the first position is;
a lifting boss (430) is arranged in the recess (420) on the one of the plurality of protrusion-recess structures closest to the tail end (130) of the shell (100), a spacing for accommodating the positioning pin (310) is formed between a protrusion (410) on the one of the plurality of protrusion-recess structures closest to the tail end (130) of the shell (100) and the lifting boss (430) in the direction from the connector end (120) to the tail end (130) of the shell (100), and a fourth guide chamfer is provided on a side of the lifting boss (430) facing the connector end (120) of the shell (100);
when the fastening member (510) is changed from the open state to the engaged state, the fourth guide chamfer is configured to be in sliding contact with the second guide chamfer (312) of the positioning pin (310) and push the positioning pin (310) to move toward an outer side of the respective positioning hole (110) to a top surface of the lifting boss (430); and when the top end of the positioning pin (310) abuts against the top surface of the lifting boss (430), the outer edge (3111) of the first guide chamfer is located outside the respective positioning hole (110) and the outer edge (3121) of the second guide chamfer is located inside the respective positioning hole (110).

8. The ISOFIX structure according to claim 7, **characterized in that** the first abutting portion (512) and the second abutting portion (513) form a stepped structure, and when the fastening member (510) is in the engaged state, an end of the lock release structure (400) close to the connector end (120) is engaged in the stepped structure, and the first abutting portion (512) is configured to prevent the fastening member (510) from rotating relative to the shell (100).

9. The ISOFIX structure according to claim 1, **characterized in that** the elastic locking pin assembly comprises a guide sleeve (610), a through hole communicating an inside and an outside of the base sleeve (200) is formed on a wall of the base sleeve (200), the guide sleeve (610) is connected to an outer wall of the base sleeve (200), and an opening of the guide sleeve (610) is aligned with the through hole; and
the positioning pin (310) is slidably connected in the guide sleeve (610), and the elastic reset member is located between a bottom of the guide sleeve (610) and a bottom of the positioning pin (310).

10. A child safety seat, **characterized by** comprising the ISOFIX structure according to any one of claims 1-9.
